# EUROPEAN PATENT APPLICATION

(11) **EP 4 527 896 A1**
(43) Date of publication of application: **26.03.2025**
(21) Application number: 23807516.2
(22) Date of filing: 10.05.2023
(51) Int. Cl.: C08L 101/00, C08L 23/00, C08L 63/00, C08L 77/00

(54) **THERMOSETTING RESIN COMPOSITION AND CURED PRODUCT**

(30) Priority: 17.05.2022 JP 2022080989
(71) Applicant: Polyplastics-Evonik Corporation, Tokyo, 163-0913 (JP)
(72) Inventor: MUTSUDA, Mitsuteru, Tokyo 108-8230 (JP); NAKAIE, Yoshiki, Tokyo 163-0913 (JP); FUJIKI, Daisuke, Tokyo 163-0913 (JP)
(74) Representative: Grünecker Patent- und Rechtsanwälte PartG mbB
(86) International application number: PCT/JP2023/017570
(87) International publication number: WO 2023/223912

(57) **Abstract**

The present disclosure provides a thermosetting resin composition which can give a cured product having high toughness and in which the resin particles are unlikely to absorb moisture, and the like. The present disclosure relates to a thermosetting resin composition containing a thermosetting resin and resin particles, in which the resin particles contain a polyamide resin and a polyolefin resin, and the content of the polyamide resin in the resin particles is 50% by weight or more, and the like.

## Description

### Technical Field

The present disclosure relates to a thermosetting resin composition and a cured product.

### Background Art

Conventionally, from the viewpoint of, for example, enhancing the toughness of a cured product obtained by curing a thermosetting resin composition, a thermosetting resin composition having a thermosetting resin and resin particles containing a polyamide resin has been used (for example, Patent Literature 1).

### Citation List

### Patent Literature

Patent Literature 1: International Publication No. WO 2015/019965

### Summary of Invention

### Technical Problem

By the way, the polyamide resin contained in the resin particles is a resin that is relatively likely to absorb moisture.

Here, when the thermosetting resin composition is made to contain the resin particles, it may be required to suppress the moisture contained in the resin particles in order to suppress voids included in the cured product and in order to facilitate mixing of the resin particles and the thermosetting resin.

That is, resin particles that are unlikely to absorb moisture may be required.

In addition, a cured product with even higher toughness may be required.

Therefore, a first object of the present disclosure is to provide a thermosetting resin composition which can give a cured product having high toughness and in which the resin particles are unlikely to absorb moisture, and a second object thereof is to provide a cured product obtained by thermally curing the thermosetting resin composition.

### Solution to Problem

A first aspect of the present disclosure relates to a thermosetting resin composition containing a thermosetting resin and resin particles,
in which the resin particles contain a polyamide resin and a polyolefin resin, and
the content of the polyamide resin in the resin particles is 50% by weight or more.

In addition, a second aspect of the present disclosure relates to a cured product obtained by thermally curing the thermosetting resin composition.

### Advantageous Effects of Invention

According to the present disclosure, a thermosetting resin composition can be provided which can give a cured product having high toughness and in which the resin particles are unlikely to absorb moisture. In addition, according to the present disclosure, a cured product obtained by thermally curing the thermosetting resin composition can be provided.

### Brief Description of Drawing

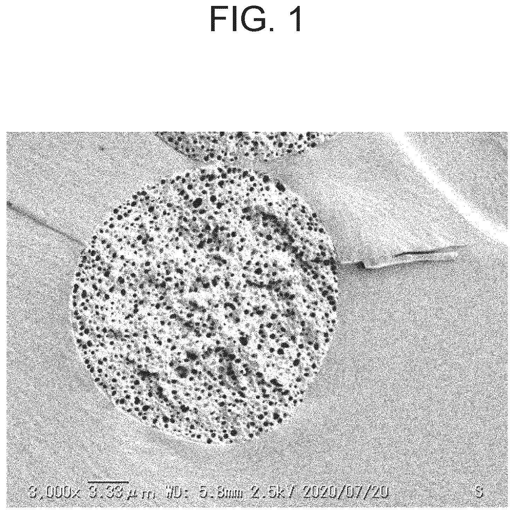

[Figure 1] Figure 1 is a SEM photograph of the cross-section of the resin particles in Example C-1 (in the cross-section, the resin particles have been etched with toluene, and the portions where holes have been made are the portions where the polyolefin resin was present).

### Description of Embodiments

Hereinafter, one embodiment of the present disclosure will be described.

Note that each configuration in each embodiment and combinations thereof, and the like, are only examples, and additions, omissions, substitutions, and other changes to the configuration can be made as appropriate within the scope that does not depart from the gist of the present disclosure. The present disclosure is not limited by embodiments, but only by the scope of claims.

In addition, each of the aspects disclosed in this specification can be combined with any other characteristics disclosed in this specification.

First, a thermosetting resin composition according to the present embodiment will be described.

The thermosetting resin composition according to the present embodiment contains a thermosetting resin and resin particles.

The resin particles contain a polyamide resin and a polyolefin resin.

The content of the polyamide resin in the resin particles is 50% by weight or more.

### (Thermosetting resin)

Examples of the thermosetting resin include, for example, an epoxy resin, a phenolic resin, an unsaturated polyester resin, a vinyl ester resin, an acrylic resin, a urea resin, a melamine resin, an aniline resin, a polyimide resin, a bismaleimide resin, and the like. These thermosetting resins may be used singly or in combinations of two or more thereof.

As the thermosetting resin, an epoxy resin and a phenolic resin are preferred, and an epoxy resin is particularly preferred.

Since an epoxy resin has excellent compatibility with the polyamide resin, the thermosetting resin containing an epoxy resin results in easier dispersion of the resin particles containing the polyamide resin in the epoxy resin, and easier demonstration of the effect of improving toughness by the resin particles.

Examples of the epoxy resin include, for example, a glycidyl ether type epoxy resin, a glycidyl amine type epoxy resin, a glycidyl ester type epoxy resin, an alkene oxide (for example, vinylcyclohexene dioxide and the like), triglycidyl isocyanurate, and the like.

Examples of the glycidyl ether type epoxy resin include, for example, a bisphenol type epoxy resin, a phenol type epoxy resin, a dicyclopentadiene type epoxy resin, an epoxy resin (polyglycidyl ether) having an aromatic skeleton, an alkanediol diglycidyl ether, a polyalkanediol diglycidyl ether, an epoxy resin (polyglycidyl ether) having an aliphatic skeleton, and the like.

Examples of the bisphenol type epoxy resin include, for example, a reaction product of a bisphenol with epichlorohydrin, a reaction product of an alkylene oxide adduct of a bisphenol with epichlorohydrin, and the like.

Examples of the bisphenol include, for example, a bisphenol A type epoxy resin, a bisphenol F type epoxy resin, a bisphenol S type epoxy resin, a brominated bisphenol type epoxy resin, and the like.

In the alkylene oxide adduct of a bisphenol, the number of moles of alkylene oxide added per mole of hydroxyl group of the bisphenol is, for example, 1 mole or more (for example, 1 to 20 moles), preferably 1 to 15 moles, and further preferably 1 to 10 moles.

Examples of the phenol type epoxy resin include, for example, a phenol novolac type epoxy resin, a cresol novolac type epoxy resin, a naphthol novolac type epoxy resin, a bisphenol A novolac type epoxy resin, a bisphenol F novolac type epoxy resin, a biphenyl skeleton-containing phenol novolac resin, a xylylene skeleton-containing phenol novolac resin, and the like.

Examples of the epoxy resin (polyglycidyl ether) having an aromatic skeleton include, for example, a glycidyl ether having a naphthalene skeleton and the like.

Examples of the glycidyl ether having a naphthalene skeleton include, for example, di(glycidyloxy)naphthalene, bis[2,7-di(glycidyloxy)naphthyl]methane, and the like.

Examples of the di(glycidyloxy)naphthalene include, for example, 1,5-di(glycidyloxy)naphthalene and the like.

Examples of the alkanediol diglycidyl ether include, for example, a C₂₋₁₀ alkanediol diglycidyl ether and the like.

Examples of the C₂₋₁₀ alkanediol diglycidyl ether include, for example, butanediol diglycidyl ether, neopentyl glycol diglycidyl ether, 1,6-hexanediol diglycidyl ether, and the like.

Examples of the polyalkanediol diglycidyl ether include, for example, a poly-C₂₋₄ alkanediol diglycidyl ether and the like.

Examples of the poly-C₂₋₄ alkanediol diglycidyl ether include, for example, a polypropylene glycol diglycidyl ether and the like.

Examples of the epoxy resin (polyglycidyl ether) having an aliphatic skeleton include a glycidyl polyether of a polyol and the like.

Examples of the polyol include, for example, an alkanetriol, an alkanetetraol, an alkanepentaol, an alkanehexaol, and the like. Examples of the alkanetriol include a C₃₋₁₀ alkanetriol and the like. Examples of the alkanetetraol include a C₃₋₁₀ alkanetetraol and the like.

Examples of the glycidyl polyether include a diglycidyl ether, a triglycidyl ether, a tetraglycidyl ether, a pentaglycidyl ether, a hexaglycidyl ether, and the like.

Examples of the glycidyl polyether of a polyol include, for example, trimethylolpropane diglycidyl ether, trimethylolpropane triglycidyl ether, glycerin diglycidyl ether, glycerin triglycidyl ether, and the like.

Examples of the glycidyl amine type epoxy resin include, for example, tetraglycidyl diaminodiphenylmethane, triglycidyl-p-aminophenol, triglycidyl aminocresol, diglycidyl aniline, N,N-diglycidyl-4-glycidyloxyaniline, and the like.

Examples of the glycidyl ester type epoxy resin include, for example, a diglycidyl ester of a dicarboxylic acid and the like.

Examples of the dicarboxylic acid include, for example, an aromatic dicarboxylic acid, a hydrogenated aromatic dicarboxylic acid, and the like.

Examples of the aromatic dicarboxylic acid include, for example, terephthalic acid, isophthalic acid, phthalic acid, tetrahydrophthalic acid, hexahydrophthalic acid, and the like.

These epoxy resins may be used singly or in combinations of two or more thereof.

Among these epoxy resins, in terms of strength and other properties, an epoxy resin having an aromatic skeleton is preferred, and a bisphenol type epoxy resin is particularly preferred.

Examples of the phenolic resin include, for example, a resin having one or more, preferably two or more, phenolic hydroxy groups in one molecule.

Examples of the phenolic resin include, for example, a novolac type phenolic resin, a resole type phenolic resin, a polyoxystyrene resin, and the like.

The novolac type phenolic resin is a condensation product of a phenol and an aldehyde. The novolac type phenolic resin is obtained by, for example, condensation polymerization of a phenol and an aldehyde in the presence of an acidic catalyst.

The resole type phenolic resin is a condensation product of a phenol and an aldehyde. The resole type phenolic resin is obtained by, for example, condensation polymerization of a phenol and an aldehyde in the presence of an alkaline catalyst.

Examples of the phenol include, for example, phenol, cresol, trimethylphenol, xylenol, resorcinol, catechol, butylphenol, octylphenol, nonylphenol, phenylphenol, dihydroxybenzene, bisphenol A, naphthol, and the like.

Examples of the cresol include o-cresol, m-cresol, and p-cresol.

Examples of the trimethylphenol include 2,3,5-trimethylphenol and the like.

Examples of the xylenol include 2,3-xylenol, 2,4-xylenol, 2,5-xylenol, 3,4-xylenol, 3,5-xylenol, and the like.

Examples of the aldehyde include, for example, formaldehyde, paraformaldehyde, acetaldehyde, benzaldehyde, hydroxybenzaldehyde, glyoxal, glutaraldehyde, terephthalaldehyde, isophthalaldehyde, propionaldehyde, butyraldehyde, isobutyraldehyde, 3-methylbutyraldehyde, p-tolylaldehyde, phenylacetaldehyde, and the like.

Examples of the hydroxybenzaldehyde include o-hydroxybenzaldehyde, m-hydroxybenzaldehyde, and p-hydroxybenzaldehyde.

Examples of the novolac type phenolic resin include, for example, a novolac resin (condensation product of phenol and formaldehyde), a cresol novolac resin (condensation product of cresol and formaldehyde), and the like.

The phenolic resins may be used singly or in combinations of two or more thereof.

The hydroxy group equivalent of the phenolic resin is preferably 50 to 500 g/eq., and more preferably 100 to 350 g/eq.

The thermosetting resin composition according to the present embodiment has preferably 40 to 99% by weight, and more preferably 80 to 97% by weight, of the thermosetting resin.

### (Resin particles)

The resin particles are formed of a resin composition for resin particles that contains a polyamide resin and a polyolefin resin.

Examples of the polyamide resin include an aliphatic polyamide resin, an alicyclic polyamide resin, an aromatic polyamide resin, and the like.

The polyamide resin may be a homopolyamide resin or a copolyamide resin.

The polyamide resin may have a first functional group.

Examples of the first functional group include an amino group, a carboxy group, an acid anhydride group, an epoxy group, an isocyanate group, a carbodiimide group, and the like.

Examples of the amino group include "-NH₂" and "-NHR".

R is an alkyl group. Examples of R include, for example, a methyl group, an ethyl group, a propyl group, and the like.

Examples of the acid anhydride group include a carboxylic anhydride group and the like.

Examples of the aliphatic polyamide resin include a polyamide resin of an aliphatic diamine component and an aliphatic dicarboxylic acid component, a polyamide resin of a lactam, a polyamide resin of an aminocarboxylic acid, a polyamide resin of an aliphatic diamine component, an aliphatic dicarboxylic acid component, and a lactam and/or aminocarboxylic acid, and the like.

Examples of the aliphatic diamine component include, for example, a C4-16 alkylenediamine (for example, tetramethylenediamine, hexamethylenediamine, dodecanediamine, and the like) and the like. The aliphatic diamine component is preferably a C6-14 alkylenediamine, and further preferably a C6-12 alkylenediamine.

Examples of the aliphatic dicarboxylic acid component include, for example, a C4-20 alkanedicarboxylic acids (for example, adipic acid, sebacic acid, dodecanedioic acid, and the like) and the like. The aliphatic dicarboxylic acid component is preferably a C5-16 alkanedicarboxylic acid, and further preferably a C6-14 alkanedicarboxylic acid.

Examples of the lactam include, for example, a lactam having 4 to 20 carbon atoms (for example, ε-caprolactam, ω-laurolactam, and the like) and the like. The lactam is preferably a lactam having 4 to 16 carbon atoms.

Examples of the aminocarboxylic acid include, for example, a C4-20 aminocarboxylic acid (for example, ω-aminoundecanoic acid and the like) and the like. The aminocarboxylic acid is preferably a C4-16 aminocarboxylic acid, and further preferably a C6-14 aminocarboxylic acid.

Examples of the aliphatic polyamide resin include, for example, polyamide 6, polyamide 11, polyamide 12, polyamide 46, polyamide 66, polyamide 610, polyamide 611, polyamide 612, polyamide 613, polyamide 1010, polyamide 66/11, polyamide 66/12, polyamide 6/12/612, and the like.

Examples of the alicyclic polyamide resin include a polyamide resin having at least one selected at least from an alicyclic diamine component and an alicyclic dicarboxylic acid component as a constitutional component, and the like.

As the alicyclic polyamide resin, an alicyclic polyamide resin containing the aliphatic diamine component and/or aliphatic dicarboxylic acid component listed above together with the alicyclic diamine component and/or alicyclic dicarboxylic acid component as the diamine component and dicarboxylic acid component is preferred. Such an alicyclic polyamide resin has high transparency and is known as a so-called transparent polyamide resin.

Examples of the alicyclic diamine component include, for example, a diaminocycloalkane, a bis(aminocycloalkyl)alkane, a hydrogenated xylylenediamine, and the like.

Examples of the diaminocycloalkane include, for example, diaminocyclohexane and the like. The diaminocycloalkane is preferably a diamino-C5-10 cycloalkane.

Examples of the bis(aminocycloalkyl)alkane include, for example, bis(4-aminocyclohexyl)methane, bis(4-amino-3-methylcyclohexyl)methane, 2,2-bis(4'-aminocyclohexyl)propane, and the like. The bis(aminocycloalkyl)alkane is preferably a bis(amino-C5-8 cycloalkyl)C1-3 alkane.

The alicyclic diamine component may have a substituent group, such as an alkyl group and the like, for example.

The alkyl group is preferably a C1-6 alkyl group, more preferably a C1-4 alkyl group, and further preferably a C1-2 alkyl group (a methyl group, an ethyl group, and the like).

Examples of the alicyclic dicarboxylic acid include, for example, a cycloalkanedicarboxylic acid (for example, cyclohexane-1,4-dicarboxylic acid, cyclohexane-1,3-dicarboxylic acid, and the like) and the like.

Representative examples of the alicyclic polyamide resin include, for example, a condensation product of an alicyclic diamine component [for example, a bis(aminocyclohexyl)alkane and the like] and an aliphatic dicarboxylic acid component [for example, an alkanedicarboxylic acid (for example, a C4-20 alkanedicarboxylic acid component and the like) and the like] and the like.

The aromatic polyamide resin is a concept that includes a polyamide resin that contains at least any one of an aromatic diamine component and an aromatic dicarboxylic acid component as a constitutional unit.

Examples of the aromatic polyamide resin include a polyamide resin in which both the constitutional unit diamine component and the constitutional unit dicarboxylic acid component are aromatic components (also referred to as "fully aromatic polyamide resin", "aramid," and the like) and the like.

The aromatic polyamide resin may be a modified polyamide resin. Examples of the modified polyamide resin include a polyamide resin having a branched chain structure and the like.

Examples of the aromatic diamine component include meta-xylylenediamine and the like.

Examples of the aromatic dicarboxylic acid component include terephthalic acid, isophthalic acid, and the like. The aromatic dicarboxylic acid component may also be a dimer acid or the like.

These polyamide resins may be used singly or in combinations of two or more thereof.

As the polyamide resin, in terms of high reinforcing effect, a semi-crystalline polyamide resin (for example, an alicyclic polyamide resin, an aliphatic polyamide resin, and the like) is preferred.

The number average molecular weight of the polyamide resin is, for example, 8000 to 200000, preferably 9000 to 150000, and further preferably 10000 to 100000.

Note that, in the present embodiment, the number average molecular weight refers to that measured from the molecular weight distribution in terms of polymethyl methacrylate (PMMA) using gel permeation chromatography (GPC) using hexafluoroisopropanol (HFIP). As the column in such GPC, an appropriate column for measuring the molecular weight may be used.

The melting point of the polyamide resin is, for example, 150°C or higher (for example, 155 to 350°C), preferably 160°C or higher (for example, 165 to 300°C), and further preferably 170°C or higher (for example, 175 to 270°C).

In the present embodiment, the melting point can be measured using a differential scanning calorimeter (DSC), for example.

More specifically, first, about 5 mg of sample is prepared for measuring the melting point, and two metal (for example, aluminum) containers with the same shape and the same weight are also prepared.

Next, the sample is placed in one of the two containers, and the other container is left empty.

Then, the container in which the sample is placed and the empty container as the reference are set in a DSC, and the sample is heated at a temperature increase rate of 10°C/min under nitrogen gas flow to obtain a DSC curve, from which the melting point can be determined.

Note that the melting point can be determined by performing differential scanning calorimetry twice on the same sample, and is determined as the peak value of the second DSC curve.

The glass transition temperature (Tg) of the polyamide resin is preferably 30°C to 160°C.

Note that, in the present embodiment, the glass transition temperature (Tg) means the midpoint glass transition temperature measured using a differential scanning calorimeter (DSC).

The midpoint glass transition temperature can be determined based on the method described in JIS K7121-1987 "Testing Methods for Transition Temperatures of Plastics".

That is, first, about 5 mg of sample is prepared for measuring the midpoint glass transition temperature, and two metal (for example, aluminum) containers with the same shape and the same weight are also prepared.

Subsequently, the sample is placed in one of the two containers, and the other container is left empty.

Then, the container in which the sample is placed and the empty container as the reference are set in a DSC, and the sample is heated at a temperature increase rate of 10°C/min under nitrogen gas flow to obtain a DSC curve, from which the midpoint glass transition temperature can be determined.

The degree of crystallinity of the polyamide resin is preferably 80% or less (for example, 1 to 75%), and more preferably 50% or less (for example, 10 to 50%).

In the present embodiment, the degree of crystallinity can be measured based on wide angle X-ray diffraction (WAXD).

For example, the degree of crystallinity (%) can be determined according to the expression below, by using powder X-ray analysis software ("PDXL Ver.2.3.1.0" manufactured by Rigaku Corporation) to perform fitting (method: FP method, peak shape: log-normal distribution, background refinement: none) to the diffraction curve obtained by wide angle X-ray diffraction to thereby separate crystalline diffraction peaks and amorphous haloes.

Degree of crystallinity = [Sum of integrated intensity of crystal diffraction peaks (cps.deg)]/[Sum of integrated intensity of crystal diffraction peaks and amorphous haloes (cps.deg)] × 100%

The resin particles contain preferably 50% by weight or more, more preferably 60 to 99% by weight, and even further preferably 70 to 95% by weight, of the polyamide resin.

The polyolefin resin is a resin that contains an olefin as a constitutional unit.

Examples of the olefin include an α-olefin, ethylene, 2-butene, isoprene, 2-pentene, and the like.

Examples of the α-olefin include an α-olefin having 3 to 20 carbon atoms, and specific examples thereof include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, and the like.

The polyolefin resin may be a homopolymer, or may be a copolymer.

It is preferable that the polyolefin resin has a second functional group that is capable of reacting with the first functional group of the polyamide resin.

Examples of the second functional group include a carboxy group, an amino group, a carboxylic anhydride group, an epoxy group, an isocyanate group, a carbodiimide group, and the like.

The polyolefin resin may have the epoxy group by having a glycidyl group.

The melting point of the polyolefin resin is, for example, 30 to 200°C, preferably 35 to 175°C, and further preferably 40 to 160°C.

The resin particles preferably contain 80 to 100% by weight, more preferably 90 to 100% by weight, and further preferably 95 to 100% by weight of the polyamide resin and the polyolefin resin in total.

The resin particles contain preferably 0.5 to 50% by weight, more preferably 1 to 40% by weight, and further preferably 5 to 30% by weight of the polyolefin resin.

Also, the resin particles may further contain additives. In other words, the resin composition for resin particles may further contain additives.

Examples of the additives include, for example, a stabilizer, a coloring agent, a dispersing agent, a preservative, an antioxidant, an antifoaming agent, and the like.

The additives may be used singly or in combinations of two or more thereof.

The total content ratio of the additives is, for example, 10 parts by weight or less (for example, 0.01 to 10 parts by weight) based on 100 parts by weight in total of the polyamide resin and the polyolefin resin.

The median diameter of the resin particles can be selected from the range of, for example, 2 µm or more (for example, 3 to 40 µm), and is preferably 4 µm or more (for example, 5 to 40 µm), more preferably 6 µm or more (for example, 7 to 35 µm), further preferably 8 µm or more (for example, 9 to 30 µm), and particularly preferably 10 µm or more (for example, 11 to 30 µm).

The median diameter of the resin particles means the value measured by dispersing the resin particles in water and using a laser diffraction/scattering type particle size distribution measuring apparatus. In addition, the median diameter of the resin particles means the median diameter of the resin particles on a volume basis.

Furthermore, the median diameter of the resin particles means the median diameter of the resin particles as primary particles.

It is preferable that the resin particles have a matrix-domain structure containing a matrix and domains (also referred to as "sea-island structure"), the matrix contains the polyamide resin, and the domains contain the polyolefin resin.

In the resin particles having a matrix-domain structure, the multiple domains are dispersed in the matrix.

The matrix containing the polyamide resin in the resin particles makes it easier to fully demonstrate the effect of improving the toughness of the cured product by the resin particles containing the polyamide resin.

In addition, dispersion of the domains containing the polyolefin resin in the matrix makes it easier to contain a large amount of the polyolefin resin in the resin particles.

The expression "the matrix contains the first resin" means "the first resin is contained more in the matrix than in the domains". Also, the expression "the domains contain the second resin" means "the second resin is contained more in the domains than in the matrix".

Note that whether the resin particles have a matrix-domain structure containing a matrix and domains, the matrix contains the first resin, and the domains contain the second resin can be checked as follows.

First, the resin particles are cut to obtain a cross-section.

Next, the cross-section is etched with toluene.

Then, the etched cross-section is observed with a scanning electron microscope (SEM) to check whether the matrix-domain structure (matrix: the first resin, domains: the second resin) is present or not.

Note that, in the cross-section, the portions where the resin particles have been etched with toluene and holes have been made are the portions where the polyolefin resin was present.

The average particle diameter of the domains is preferably 1/3 or less of the average particle diameter of the resin particles, more preferably 1/4 or less of the average particle diameter of the resin particles, even more preferably 1/5 or less of the average particle diameter of the resin particles, further preferably 1/8 or less of the average particle diameter of the resin particles, and particularly preferably 1/10 or less of the average particle diameter of the resin particles. Also, the average particle diameter of the domains is, for example, 1/2000 of the average particle diameter of the resin particles.

The specific gravity of the resin composition for resin particles is preferably less than 1.3, more preferably 0.80 to 1.25, and further more preferably 0.85 to 1.20.

The specific gravity of the resin composition for resin particles can be determined as follows.

First, from the resin composition for resin particles, a dumbbell test specimen as specified in ISO is fabricated by injection molding.

Then, using the dumbbell test specimen, the specific gravity of the resin composition for resin particles is measured in accordance with method A (immersion method) of JIS K 7112:1999.

The sphericity of the resin particles is preferably 95% or more and 100% or less, more preferably 97% or more and 100% or less, and further preferably 99% or more and 100% or less.

Note that, in the present embodiment, the sphericity of the particles can be measured by the following method. That is, the particles are observed with a scanning electron microscope (SEM), the long diameter and short diameter of 30 randomly selected particles are measured, and the short diameter/long diameter ratio of each particle is determined. Then, the arithmetic average value of the short diameter/long diameter ratios is obtained, and this arithmetic average value is used as the sphericity of the particles. Note that the closer the sphericity of a particle is to 100%, the more spherical the particle can be considered to be.

The thermosetting resin composition according to the present embodiment has preferably 50 to 99% by weight, and more preferably 80 to 97% by weight, of the thermosetting resin and the resin particles in total.

The thermosetting resin composition according to the present embodiment contains preferably 1 to 30 parts by weight, more preferably 3 to 25 parts by weight, and more preferably 5 to 20 parts by weight, of the resin particles based on 100 parts by weight of the thermosetting resin.

### (Method for producing resin particles)

Examples of the method for producing the resin particles include freezing pulverization, chemical pulverization, polymerization, forced emulsification, laser, and other methods.

The method for producing the resin particles is preferably the forced emulsification method.

In the forced emulsification method, the resin particles are obtained by performing step (A) of melt kneading the polyamide resin, the polyolefin resin, and an aqueous medium incompatible with the polyamide resin and the polyolefin resin by heating to obtain a melt kneaded product, step (B) of cooling the melt kneaded product, and step (C) of removing the aqueous medium from the cooled melt kneaded product with a hydrophilic solvent or water.

In the forced emulsification method, the resin particles may be obtained by, if necessary, performing step (D) of drying the melt kneaded product in a dehumidifying dryer or the like after the step (C).

Also, in order to obtain resin particles with the desired particle diameter, in the forced emulsification method, the resin particles may be obtained by performing step (E) of classifying the melt kneaded product after the step (C) (in the case where the step (D) is performed, after the step (D) or before the step (D)).

The aqueous medium used in the step (A) is selected depending on the type of the polyamide resin and the polyolefin resin.

Examples of the aqueous medium include, for example, a thermomeltable saccharide, a water-soluble polymer, and the like.

Examples of the thermomeltable saccharide include, for example, an oligosaccharide (for example, sucrose, maltotriose, and the like), a sugar alcohol (for example, xylitol, erythritol, sorbitol, mannitol, and the like), and the like.

Examples of the water-soluble polymer include, for example, a water-soluble synthetic polymer (for example, polyethylene glycol, polyvinyl alcohol, sodium polyacrylate, polyacrylamide, and the like), a polysaccharide (for example, starch, methylcellulose, and the like), and the like.

These aqueous media may be used singly or in combinations of two or more thereof.

As the aqueous medium, polyethylene glycol is preferred from the viewpoint that it is easy to adjust the resin particles to an appropriate particle diameter.

As for the weight ratio of the aqueous medium, the aqueous medium is, for example, 10 to 100 parts by weight, preferably 20 to 100 parts by weight, and further preferably 30 to 100 parts by weight based on 100 parts by weight in total of the polyamide resin and the polyolefin resin.

The volume ratio of the aqueous medium is, for example, 50% by volume or more (for example, 50 to 90% by volume) with respect to the total volume of the aqueous medium, the polyamide resin, and the polyolefin resin.

The temperature at which the melt kneading is performed in the step (A) may be a temperature that is at or above the melting point or softening point of the polyamide resin and also at or above the melting point or softening point of the polyolefin resin, and it is, for example, 190°C or higher (for example, 190 to 350°C), preferably 200 to 320°C, and further preferably 210 to 300°C.

In the step (B), the melt kneaded product may be cooled naturally or the melt kneaded product may be forced cooled, but from the viewpoint of productivity, it is preferable that the melt kneaded product is forced cooled.

The cooling rate for the melt kneaded product is preferably 1°C/min or more (for example, 1 to 10°C/min), for example.

Examples of the hydrophilic solvent used in the step (C) include, for example, an alcohol (ethanol and the like), a water-soluble ketone (acetone and the like), and the like.

### (Reinforcing fibers)

The thermosetting resin composition according to the present embodiment may contain reinforcing fibers. That is, the cured product obtained by thermally curing the thermosetting resin composition according to the present embodiment may be a fiber-reinforced plastic (FRP).

Examples of the reinforcing fibers include, for example, carbon fibers, glass fibers, aramid fibers, boron fibers, polyparaphenylene-benzobis-oxazole (PBO) fibers, polyethylene fibers, alumina fibers, silicon carbide fibers, and the like.

As the reinforcing fibers, carbon fibers are preferred. That is, the cured product is preferably a carbon fiber-reinforced plastic (CFRP).

The reinforcing fibers may be monofilaments, or may be multifilaments.

The fineness of a single fiber of the reinforcing fibers is preferably 0.2 to 2.0 dtex, and more preferably 0.4 to 1.8 dtex.

In the case where the reinforcing fibers are multifilaments, the number of filaments in the fibers is preferably 2500 to 50000.

The reinforcing fibers may be continuous fibers or may be in a discontinuous form.

In the case where higher dynamic characteristics are required of the cured product, continuous fibers are preferred as the reinforcing fibers.

The continuous fibers may be contained in the thermosetting resin composition according to the present embodiment as a unidirectional base material, a knitted fabric, a woven fabric, a tow, a roving, or the like, for example.

The reinforcing fibers in a discontinuous form may be contained in the thermosetting resin composition according to the present embodiment as a nonwoven fabric, a chopped strand, or the like, for example.

The thermosetting resin composition according to the present embodiment contains preferably 1 to 50 parts by weight, and more preferably 5 to 30 parts by weight, of the reinforcing fibers based on 100 parts by weight of the thermosetting resin.

### (Monofunctional epoxy compound)

In the case where the thermosetting resin contains an epoxy resin, the thermosetting resin composition according to the present embodiment may contain a monofunctional epoxy compound.

Examples of the monofunctional epoxy compound include a monoglycidyl ether, an alkene oxide (for example, octylene oxide, styrene oxide, and the like), and the like.

Examples of the monoglycidyl ether include, for example, an alkyl glycidyl ether (for example, 2-ethylhexyl glycidyl ether and the like), an alkenyl glycidyl ether (for example, an allyl glycidyl ether and the like), an aryl glycidyl ether (for example, phenyl glycidyl ether and the like), and the like.

In the thermosetting resin composition according to the present embodiment, the ratio of the weight of the epoxy resin to the weight of the monofunctional epoxy compound is, for example, 99/1 to 50/50, preferably 97/3 to 60/40, and further preferably 95/5 to 70/30.

### (Curing agent)

The thermosetting resin composition according to the present embodiment may contain a curing agent.

The curing agent can be selected as appropriate depending on the type of the thermosetting resin.

Examples of the curing agent in the case where the thermosetting resin is an epoxy resin include, for example, an amine-based curing agent, a phenolic resin-based curing agent, an acid anhydride-based curing agent, a polymercaptan-based curing agent, a latent curing agent, and the like.

Examples of the amine-based curing agent include, for example, an aromatic amine-based curing agent, an aliphatic amine-based curing agent, an imidazole, a salt of an imidazole, an alicyclic amine-based curing agent, and the like.

Examples of the aromatic amine-based curing agent include, for example, a polyaminoarene, a polyamino-alkylarene, a poly(aminoalkyl)arene, a poly(aminoaryl)alkane, a poly(amino-alkylaryl)alkane, a bis(aminoarylalkyl)arene, a di(aminoaryl) ether (for example, diaminodiphenyl ether and the like), a di(aminoaryloxy)arene (for example, 1,3-bis(3-aminophenoxy)benzene and the like), a di(aminoaryl)sulfone (for example, diaminodiphenyl sulfone and the like), and the like.

Examples of the polyaminoarene include, for example, a diaminoarene (for example, para-phenylenediamine, meta-phenylenediamine, and the like) and the like.

Examples of the polyamino-alkylarene include, for example, a diamino-alkylarene (for example, diethyltoluene diamine and the like) and the like.

Examples of the poly(aminoalkyl)arene include, for example, a di(aminoalkyl)arene (for example, xylylenediamine and the like) and the like.

Examples of the poly(aminoaryl)alkane include, for example, a di(aminoaryl)alkane (for example, diaminodiphenylmethane and the like) and the like.

Examples of the poly(amino-alkylaryl)alkane include, for example, di(amino-alkylaryl)alkane (for example, 4,4'-methylenebis(2-ethyl-6-methylaniline) and the like) and the like.

Examples of the bis(aminoarylalkyl)arene include, for example, 1,3-bis[2-(4-aminophenyl)-2-propyl)]benzene, 1,4-bis[2-(4-aminophenyl)-2-propyl)]benzene, and the like.

Examples of the aliphatic amine-based curing agent include, for example, ethylenediamine, hexamethylenediamine, diethylenetriamine, triethylenetetetramine, tetraethylenepentamine, diethylaminopropylamine, and the like.

Examples of the alicyclic amine-based curing agent include, for example, menthenediamine, isophoronediamine, bis(4-amino-3-methylcyclohexyl)methane, 3,9-bis(3-aminopropyl)-2,4,8,10-tetraoxaspiro[5.5]undecane, norbornanediamine, and the like.

Examples of the imidazole include, for example, an alkylimidazole, an arylimidazole, and the like.

Examples of the alkylimidazole include, for example, 2-methylimidazole, 2-phenylimidazole, 2-heptadecylimidazole, 2-ethyl-4-methylimidazole, and the like.

Examples of the arylimidazole include, for example, 2-phenylimidazole, 2-phenyl-4-methylimidazole, 2-phenyl-4-methyl-5-hydroxymethylimidazole, 1-benzyl-2-phenylimidazole, and the like.

Examples of the salt of an imidazole include, for example, a salt of an imidazole with formic acid, a salt of an imidazole with phenol, a salt of an imidazole with phenol novolac, a salt of an imidazole with carbonic acid, and the like.

Examples of the phenolic resin-based curing agent include, for example, a novolac resin, a cresol novolac resin, and the like.

Examples of the acid anhydride-based curing agent include, for example, an aliphatic dicarboxylic anhydride, an alicyclic dicarboxylic anhydride, an aromatic dicarboxylic anhydride, and the like.

Examples of the aliphatic dicarboxylic anhydride include, for example, dodecenyl succinic anhydride and the like.

Examples of the alicyclic dicarboxylic anhydride include, for example, tetrahydrophthalic anhydride, methyl tetrahydrophthalic anhydride, hexahydrophthalic anhydride, and the like.

Examples of the aromatic dicarboxylic anhydride include, for example, phthalic anhydride, trimellitic anhydride, pyromellitic anhydride, benzophenonetetracarboxylic anhydride, and the like.

Examples of the latent curing agent include, for example, a boron trifluoride-amine complex, dicyandiamide, a carboxylic hydrazide, and the like.

These curing agents may be used singly or in combinations of two or more thereof. Note that the curing agent may also act as a curing accelerator.

As the curing agent, an amine-based curing agent (for example, aromatic amine-based curing agent) is preferred.

The content ratio of the curing agent can be selected as appropriate depending on the type of the thermosetting resin (epoxy equivalent and the like), the type of the curing agent, and the like, but for example, it is 0.1 to 300 parts by weight, preferably 1 to 250 parts by weight, further preferably 3 to 200 parts by weight (for example, 4 to 150 parts by weight), and particularly preferably 5 to 100 parts by weight based on 100 parts by weight of the thermosetting resin.

### (Curing accelerator)

The thermosetting resin composition according to the present embodiment may contain a curing accelerator.

The curing accelerator can be selected as appropriate depending on the type of the thermosetting resin.

In the case where the thermosetting resin is an epoxy resin, examples of the curing accelerator include, for example, a phosphine, an amine, a salt of an amine, and the like.

Examples of the phosphine include, for example, ethylphosphine, propylphosphine, a trialkylphosphine, phenylphosphine, triphenylphosphine, and the like.

Examples of the amine include, for example, secondary to tertiary amines, and the like.

Examples of the secondary to tertiary amines include, for example, triethylamine, piperidine, benzyldimethylamine, triethanolamine, dimethylaminoethanol, triethylenediamine, tris(dimethylaminomethyl)phenol, N,N-dimethylpiperazine, and the like.

These curing accelerators may be used singly or in combinations of two or more thereof.

The content ratio of the curing accelerator is, for example, 0.01 to 100 parts by weight, preferably 0.05 to 50 parts by weight, and further preferably 1 to 30 parts by weight based on 100 parts by weight of the thermosetting resin.

### (Other components)

The thermosetting resin composition according to the present embodiment may further contain at least any one of thermoplastic resins and additives as other components, if necessary.

Examples of the thermoplastic resins include, for example, an acrylic resin, a polyolefin resin (for example, polypropylene and the like), a polyamide resin, a polyester resin, a polycarbonate resin, a polyphenylene ether resin, a polyphenylene sulfide resin, a polysulfone resin, a polyether ketone resin, a polyether ether ketone resin, a polyimide resin, a polyether imide resin, and the like.

Examples of the polyester resin include, for example, an aromatic polyester resin (for example, polyethylene terephthalate and the like) and the like.

Examples of the additives include, for example, a non-fibrous filler, a stabilizer, a coloring agent, a dispersing agent, a preservative, an antioxidant, an antifoaming agent, and the like.

The content ratio of the other components is, for example, 10 parts by weight or less (for example, 0.01 to 10 parts by weight) based on 100 parts by weight of the thermosetting resin.

A cured product according to the present embodiment is a cured product obtained by thermally curing the thermosetting resin composition according to the present embodiment.

The shape of the cured product according to the present embodiment may be a one-dimensional shape (rod or the like), a two-dimensional shape (sheet or the like), or a three-dimensional shape.

### [Disclosed Items]

Each of the following items is disclosure of a preferred embodiment.

### [Item 1]

A thermosetting resin composition containing a thermosetting resin and resin particles,
in which the resin particles contain a polyamide resin and a polyolefin resin, and
the content of the polyamide resin in the resin particles is 50% by weight or more.

According to item 1, a thermosetting resin composition can be provided which can give a cured product having high toughness and in which the resin particles are unlikely to absorb moisture.

This mechanism is considered to be due to the following.

That is, it is considered that, since the polyolefin resin is a resin with excellent flexibility, the resin particles containing the polyolefin resin result in enhanced flexibility of the resin particles, and when external force is applied to the cured product, the force is likely to be dispersed by the resin particles, and as a result, the toughness of the cured product is enhanced.

In addition, it is considered that, since the polyolefin resin is a resin that is unlikely to absorb moisture, the resin particles containing the polyolefin resin become particles that are unlikely to absorb moisture.

### [Item 2]

The thermosetting resin composition according to item 1,
in which the polyamide resin has a first functional group, and
the polyolefin resin has a second functional group that is capable of reacting with the first functional group.

According to item 2, the dispersibility of the polyolefin resin in the resin particles is excellent.

### [Item 3]

The thermosetting resin composition according to item 2, in which the second functional group has at least one functional group selected from a carboxy group, an amino group, a carboxylic anhydride group, an epoxy group, an isocyanate group, and a carbodiimide group.

### [Item 4]

The thermosetting resin composition according to any of items 1 to 3, in which the thermosetting resin contains an epoxy resin.

### [Item 5]

The thermosetting resin composition according to any of items 1 to 4, containing 1 to 30 parts by weight of the resin particles based on 100 parts by weight of the thermosetting resin.

### [Item 6]

The thermosetting resin composition according to any of items 1 to 5,
in which the resin particles are formed of a resin composition for resin particles that contains the polyamide resin and the polyolefin resin, and
the resin composition for resin particles has a specific gravity of less than 1.3.

### [Item 7]

The thermosetting resin composition according to any of items 1 to 6, in which the polyamide resin contains an alicyclic polyamide resin.

### [Item 8]

A cured product obtained by thermally curing the thermosetting resin composition according to any of items 1 to 7.

### Examples

Next, Examples and Comparative Examples will be given to further specifically describe the present disclosure. Note that the present disclosure is not limited in any way to these Examples.

The following materials were prepared.

### (Polyamide resin)

Polyamide 12 (PA12): "L1901" manufactured by Daicel-Evonik Ltd.

Polyamide 1010 (PA1010): "DS22" manufactured by Daicel-Evonik Ltd.

Alicyclic polyamide resin (alicyclic PA): "Trogamid (R) CX7323" manufactured by Daicel-Evonik Ltd.

Alicyclic polyamide resin (alicyclic PA): "Trogamid (R) CX9704" manufactured by Daicel-Evonik Ltd.

### (Polyolefin resin)

Polyolefin resin in which a copolymer of ethylene and 1-butene has been modified with maleic anhydride: "Tafmer (R) MH5010" manufactured by Mitsui Chemicals, Inc.

Polyolefin resin in which a copolymer of ethylene and 1-butene has been modified with maleic anhydride: "Tafmer (R) MH5040" manufactured by Mitsui Chemicals, Inc.

Polyolefin resin in which a polypropylene has been modified with maleic anhydride: "Admer (R) GF500" manufactured by Mitsui Chemicals, Inc.

### (Silica filler)

Fumed silica (hydrophobic fumed silica) surface treated with hexamethyldisilazane: "RX50" manufactured by Nippon Aerosil Co., Ltd.

### (Elastomer)

Polyamide elastomer: "Vestamid (R) EX9200" manufactured by Daicel-Evonik Ltd.

### (Thermosetting resin)

Epoxy resin: "jER828" manufactured by Mitsubishi Chemical Corporation

### (Curing agent)

Amine-based curing agent: "jERCURE W" manufactured by Mitsubishi Chemical Corporation

### (Example A-1)

95 parts by weight of the polyamide 12, 5 parts by weight of the polyolefin resin (MH5010), and the aqueous solvent polyethylene glycol were melt kneaded by heating in an extruder and extruded from the die of the extruder to obtain a melt kneaded product.

Next, using a spot cooler, the melt kneaded product was forced cooled.

Then, using an aspirator and a glass filter, the precursor particles that stayed on the glass filter were washed with water while filtering the melt kneaded product.

Next, using a dehumidifying dryer, the precursor particles were dried at 90°C for 24 hours to obtain resin particles.

Next, using a hot stirrer, the epoxy resin and the resin particles were stirred for 6 hours under the conditions of 80°C and 300 rpm to obtain a mixture.

Then, the mixture was allowed to stand in a vacuum container for one hour to thereby defoam the mixture.

Next, the curing agent was added to the defoamed mixture, which was stirred and defoamed to thereby obtain a thermosetting resin composition (resin particles: 14.4% by weight).

### (Examples other than Example A-1 and Comparative Examples)

Thermosetting resin compositions (resin particles: 20% by weight) were obtained in the same manner as in Example A-1, except that the blending ratio of resin particles was set as shown in Table 1 below.

Figure 1 shows a SEM photograph of the cross-section of the resin particles in Example C-1 (in the cross-section, the resin particles have been etched with toluene, and the portions where holes have been made are the portions where the polyolefin resin was present).

### (Specific gravity of resin composition for resin particles constituting resin particles)

The specific gravity of the resin composition for resin particles, which constitutes the resin particles, was measured by the above-described method.

The specific gravity of the resin composition for resin particles is shown in Table 1 below.

### (Saturated moisture content of resin composition for resin particles constituting resin particles)

The saturated moisture content of the resin composition for resin particles, which constitutes the resin particles, was measured by the following method.

First, a square-shaped test specimen (100 mm × 100 mm × 2 mm) was prepared by injection molding from the resin composition for resin particles, which constitutes the resin particles.

Then, the square-shaped test specimen was allowed to absorb moisture in accordance with method A of JIS K 7209:2000 (ISO 62:1999) "Plastics - Determination of water absorption" (immersion in water at 23°C), and the saturated moisture content was measured.

The results are shown in Table 1 below.

### (Plane strain fracture toughness (K_{IC}) of cured product)

First, the thermosetting resin composition was poured into a metal mold (47 mm (length) × 12 mm (width) × 4 mm (thickness)).

Next, the thermosetting resin composition was heated at 175°C until the thermosetting resin composition was sufficiently thermally cured to obtain a cured product having pre-cracks. Note that, in order to provide pre-cracks in the cured product, convex portions corresponding to the pre-cracks had been formed on the inner surface of the metal mold.

Then, using the cured product having pre-cracks, the plane strain fracture toughness (K_{IC}) of the cured product was determined in accordance with ASTM D5045.

The results are shown in the following Table 1.

**[Table 1]**

| | | | Comparative Example | Example | Example | Example | Example | Example | Example | Comparative Example | Comparative Example | Example | Comparative Example | Example | Comparative Example | Example | Comparative Example |
|---|---|---|---|---|---|---|---|---|---|---|---|---|---|---|---|---|---|
| | | | A-1 | A-1 | A-2 | A-3 | A-6 | A-4 | A-5 | A-2 | B-1 | B-1 | C-1 | C-1 | D-1 | D-1 | D-2 |
| Compositional features of resin particles (parts by weight) | | | Polyamide resin only | | | | | | | | Polyamide resin only | | Polyamide resin only | | Polyamide resin only | | |
| | Polyamide resin | PA12 (L1901) | 100 | 95 | 90 | 75 | 65 | 90 | 90 | 90 | | | | | | | |
| | | PA1010 (DS22) | | | | | | | | | 100 | 80 | | | | | |
| | | Alicyclic PA (CX7323) | | | | | | | | | | | 100 | 75 | | | |
| | | Alicyclic PA (CX9704) | | | | | | | | | | | | | 100 | 75 | 70 |
| | Polyolefin resin | Tafmer MH5010 | | 5 | 10 | 25 | 35 | | | | | 20 | | 25 | | 25 | |
| | | Tafmer MH5040 | | | | | | 10 | | | | | | | | | |
| | | Admer QF500 | | | | | | | 10 | | | | | | | | |
| | Silica filler | | | | | | | | | | | | | | | | 30 |
| | Polyamide elastomer | | | | | | | | | 10 | | | | | | | |
| Median diameter of resin particles (µm) | | | 15 | 19 | 14 | 9 | 8 | 12 | 16 | 16 | 16 | 14 | 12 | 13 | 14 | 12 | 14 |
| Specific gravity of resin composition for resin particles (-) | | | 1.0 | 1.0 | 1.0 | 1.0 | 1.0 | 1.0 | 1.0 | 1.0 | 1.0 | 1.0 | 1.0 | 1.0 | 1.0 | 1.0 | 1.4 |
| Saturated moisture content of resin composition for resin particles (%) | | | 1.5 | 1.4 | 1.3 | 1.2 | 1.1 | 1.3 | 1.3 | 1.4 | 1.8 | 1.4 | 3.5 | 2.6 | 3.5 | 2.6 | 3.5 |
| K_{IC} of cured product [MPa.m^{1/2}] | | | 1.0 | 1.1 | 1.1 | 1.1 | 1.1 | 1.1 | 1.1 | 1.0 | 0.9 | 1.0 | 0.9 | 1.0 | 0.8 | 1.0 | 0.8 |

### <Results of Examples and Comparative Examples using polyamide 12 (PA12) as polyamide resin>

As shown in Table 1, Examples A-1 to A-6, which are within the scope of the present disclosure and use the polyamide 12 (PA12) as the polyamide resin, had a lower saturated water absorption rate of the resin composition for resin particles, which constitutes the resin particles, and a higher plane strain fracture toughness (K_{IC}) of the cured product compared to Comparative Example A-1, in which the resin particles are composed only of the polyamide 12 (PA12).

In addition, as shown in Table 1, the Examples A-1 to A-6 had a higher plane strain fracture toughness (K_{IC}) of the cured product compared to Comparative Example A-2, which used the polyamide elastomer in place of the polyolefin resin.

### <Results of Example and Comparative Example using polyamide 1010 (PA1010) as polyamide resin>

As shown in Table 1, Example B-1, which is within the scope of the present disclosure and uses the polyamide 1010 (PA1010) as the polyamide resin, had a lower saturated water absorption rate of the resin composition for resin particles, which constitutes the resin particles, and a higher plane strain fracture toughness (K_{IC}) of the cured product compared to Comparative Example B-1, in which the resin particles are composed only of the polyamide 1010 (PA1010).

### <Results of Example and Comparative Example using alicyclic polyamide resin (alicyclic PA) (CX7323) as polyamide resin>

In addition, as shown in Table 1, Example C-1, which is within the scope of the present disclosure and uses the alicyclic polyamide resin (alicyclic PA) (CX7323) as the polyamide resin, had a lower saturated water absorption rate of the resin composition for resin particles, which constitutes the resin particles, and a higher plane strain fracture toughness (K_{IC}) of the cured product compared to Comparative Example C-1, in which the resin particles are composed only of the alicyclic polyamide resin (alicyclic PA) (CX7323).

### <Results of Example and Comparative Examples using alicyclic polyamide resin (alicyclic PA) (CX9704) as polyamide resin>

Furthermore, as shown in Table 1, Example D-1, which is within the scope of the present disclosure and uses the alicyclic polyamide resin (alicyclic PA) (CX9704) as the polyamide resin, had a lower saturated water absorption rate of the resin composition for resin particles, which constitutes the resin particles, and a higher plane strain fracture toughness (K_{IC}) of the cured product compared to Comparative Example D-1, in which the resin particles are composed only of the alicyclic polyamide resin (alicyclic PA) (CX9704).

In addition, as shown in Table 1, the Example D-1 had a higher plane strain fracture toughness (K_{IC}) of the cured product compared to Comparative Example D-2, which used the silica filler in place of the polyolefin resin.

From the above, it can be seen that, according to the present disclosure, a thermosetting resin composition can be provided which can give a cured product having high toughness and in which the resin particles are unlikely to absorb moisture.

## Claims

1. A thermosetting resin composition comprising a thermosetting resin and resin particles,
wherein the resin particles contain a polyamide resin and a polyolefin resin, and
a content of the polyamide resin in the resin particles is 50% by weight or more.

2. The thermosetting resin composition according to claim 1,
wherein the polyamide resin has a first functional group, and
the polyolefin resin has a second functional group that is capable of reacting with the first functional group.

3. The thermosetting resin composition according to claim 2, wherein the second functional group has at least one functional group selected from a carboxy group, an amino group, a carboxylic anhydride group, an epoxy group, an isocyanate group, and a carbodiimide group.

4. The thermosetting resin composition according to any one of claims 1 to 3, wherein the thermosetting resin contains an epoxy resin.

5. The thermosetting resin composition according to any one of claims 1 to 3, comprising 1 to 30 parts by weight of the resin particles based on 100 parts by weight of the thermosetting resin.

6. The thermosetting resin composition according to any one of claims 1 to 3,
wherein the resin particles are formed of a resin composition for resin particles that contains the polyamide resin and the polyolefin resin, and
the resin composition for resin particles has a specific gravity of less than 1.3.

7. The thermosetting resin composition according to any one of claims 1 to 3, wherein the polyamide resin contains an alicyclic polyamide resin.

8. A cured product obtained by thermally curing the thermosetting resin composition according to any one of claims 1 to 3.
